(19) Europäisches Patentamt

European Patent Office

Office européen des brevets

(11) **EP 1 707 586 A1**

(12) **EUROPEAN PATENT APPLICATION**
published in accordance with Art. 158(3) EPC

(43) Date of publication:
**04.10.2006 Bulletin 2006/40**

(51) Int Cl.:
***C08G 64/02*** (2006.01)   ***C08G 18/44*** (2006.01)

(21) Application number: **05704149.3**

(22) Date of filing: **20.01.2005**

(86) International application number:
**PCT/JP2005/001039**

(87) International publication number:
**WO 2005/070997 (04.08.2005 Gazette 2005/31)**

(84) Designated Contracting States:
**DE ES**

(30) Priority: **22.01.2004 JP 2004014128**

(71) Applicant: **Ube Industries, Ltd.**
**Ube-shi,**
**Yamaguchi-ken 755-8633 (JP)**

(72) Inventors:
- **WATANABE, Masanori,**
**Ube Industries, Ltd.**
**Ube-shi,**
**Yamaguchi 7558633 (JP)**
- **KAWASHITA, Tetsuro,**
**Ube Industries, Ltd.**
**Ube-shi,**
**Yamaguchi 7558633 (JP)**

- **MORIKAMI, Atsushi,**
**Ube Industries, Ltd.**
**Ube-shi,**
**Yamaguchi 7558633 (JP)**
- **KUNIMURA, Masaru,**
**Ube Industries, Ltd.**
**Ube-shi,**
**Yamaguchi 7558633 (JP)**
- **KASHIWAGI, Kouichi,**
**Ube Industries, Ltd.**
**Ube-shi,**
**Yamaguchi 7558633 (JP)**

(74) Representative: **Wössner, Gottfried**
**HOEGER, STELLRECHT & PARTNER**
**Patentanwälte**
**Uhlandstrasse 14c**
**70182 Stuttgart (DE)**

(54) **LIQUID POLYETHER CARBONATE DIOL COMPOUND AND THERMOPLASTIC POLYURETHANE OBTAINED THEREFROM**

(57) A liquid polyethercarbonatediol compound, useful for producing a thermoplastic polyurethane having excellent weathering resistance, softness and stretchability, comprises a reaction product of (1) a carbonate-ester compound with (2) a polyetherdiol compound having, in the molecular structure thereof, structural units of -RO-(a) and structural units of $-(CH_2)-O-$(b) and/or $-CH_2CH(CH_3)-O-$(c), in which reaction product, average molecular numbers n and m of the structural units (b) and (c), per mole of the structural units (a) satisfy the requirements:

$$0 \leq n \leq 5, \ 0 \leq m \leq 5 \text{ and } 1 < (n + m) \leq 5.$$

EP 1 707 586 A1

**Description**

TECHNICAL FIELD

The present invention relates to a liquid polyethercarbonatediol compound and thermoplastic polyurethane obtained therefrom. The liquid polyethercarbonatediol compound of the present invention is usable as a component material for polyurethanes and polyesters and as a polymer modifier or polymer plasticizer. Also, the thermoplastic polyurethane of the present invention is usable as a component material for thermoplastic elastomers, elastic fibers and artificial leathers.

BACKGROUND ART

Polyols usable as component materials for producing polyurethane resins and polyester resins are heretofore usually selected from polyetherdiols and polyesterdiols. Currently, however, it is known that polycarbonatediols are useful as materials for resins having excellent, heat resistance, hydrolysis resistance and weathering resistance and, thus, have drawn industrial attention. Also, it is known that the polycarbonate resins have high stiffness and low elongation and thus the polycarbonate resins exhibit an insufficient flexibility in comparison to that of the conventional resins, particularly polyether resins. Also, the conventional polycarbonate resins have a problem that the glass transition temperature thereof is too high and the low temperature characteristics thereof are insufficient. To solve the above-mentioned problems, it is proposed to utilize, as a polyol, a polycarbonate diol having an ether group introduced into the molecule of the polyol, namely, a polyethercarbonatediol.

The diol component of the polyethercarbonatediol includes, for example, mixed diols comprising a diol compound comprising, as a component, a polycarbonate chain (particularly 1,6-hexanediol-polycarbonateglycol) with a compound having a ethyleneoxide structures; or a polymeric diol compound (Patent Reference 1), for example, a block copolymer comprising, in a molecule thereof, as principal components, polycarbonate chains and ethylene oxide structural units; and polyetherdiol compounds produced by etherifying 1,6-heanediol (Patent Reference 2) or a mixture of a polyethylpolyol (for example, diethylene glycol, triethylene glycol, tetraethylene glycol, tripropylene glycol, polypropylene glycol or polytetramethylene glycol) with a polyhydric alcohol (for example, ethylene glycol, 1,2-propanediol, 1,3-butanediol, or 1,6-hexanediol (Patent Reference 3).

The polyethercarbonatediol compound obtained from the above-mentioned polyetherdiols has an undesirable property such that the compound is gradually hardened at room temperature or that the component is a high viscous liquid having a high viscosity, and is difficult to handle. Further, as the above-mentioned polyetherdiol compound has a glass transition temperature which is not sufficiently low, the flexibility and/or the low temperature characteristics of the resultant resin are not satisfactory.

Also, Patent Reference 4 discloses that, as a diol component for the polyethercarbonatediol, diol compounds produced by a reaction of 1,6-hexanediol with ethyleneoxide and/or 1,2-polypyleneoxide can be used. The polyethercarbonatediol produced from the above-mentioned diol compounds is a low viscosity liquid which can be easily handled, and the resultant polyurethane resin comprising, as a diol component, the above-mentioned polyethercarbonate diol exhibits good low temperature characteristics. However, the thermoplastic polyetherpolymethanes produced from the polyetherdiols exhibit an ultimate elongation which is not always high enough to the requirements of practical use.

[Patent Reference 1] JP-59-66577-A
[Patent Reference 2] JP-63-305127-A
[Patent Reference 3] JP-2-255822-A
[Patent Reference 4] JP-2002-256069-A

DISCLOSURE OF INVENTION

An object of the present invention is to solve the above-mentioned problems of the prior art and to provide a liquid polyethercarbonatediol compound having a low viscosity, easy handling, a low glass transition temperature, a high elongation, an excellent low temperature characteristics and a high flexibility and being useful as a material for thermoplastic polyurethane resin, and a thermoplastic polyurethane produced from the above-mentioned diol compound.

The object of the present invention is attained by the liquid polyethercarbonatediol compound and the thermoplastic polyurethane produced from the diol compound of the present invention.

The liquid polyethercarbonatediol compound of the present invention comprises a reaction product of

(1) a carbonate ester compound, with
(2) a polyetherdiol compound comprising (A) at least one type of structural units represented by the formula (a):

-RO-         (a)

in which formula (a), R represents a member selected from unsubstituted linear alkylene groups having 3 to 5 carbon atoms and substituted alkylene groups each constituted from a linear alkylene backbone chain having 3 to 5 carbon atoms and at least one alkyl side chain attached to the backbone chain and having 1 to 4 carbon atoms, and (B) at least one type of structural units selected from those represented by the formulae (b) and (c):

$-(CH_2)_2-O-$         (b)

and

$-CH_2CH(CH_3)-O-$         (c),

wherein an average molar number n of the structural units of the formula (b) and an average molar number of m of the structural units of the formula (c) each per mole of the structural units of the formula (a) contained in the polyetherdiol compound (2) are, respectively and independently from each other, a positive number satisfying the requirements:

$$0 \leq n \leq 5$$

and

$$0 \leq m \leq 5,$$

and the sum (n + m) of the average molar numbers n and m of the structural units of the formulae (b) and (c) is a positive number satisfying the requirement:

$$1 < (n + m) \leq 5.$$

In the liquid polyethercarbonatediol compound of the present invention, in the polyetherdiol compound (2), the average molar number m of the structural units of the formula (c) per mole of the structural units of the formula (a) is preferably zero.

In the liquid polyethercarbonatediol compound of the present invention, the polyetherdiol compound (2) is preferably selected from addition reaction products of (i) at least one member selected from unsubstituted and substituted 1,3-propanediol, unsubstituted and substituted 1,4-butanediols, and unsubstituted and substituted 1,5-pentanediols, each of which substituted compounds has at least one alkyl group having 1 to 4 carbon atoms and attached to the alkylene group of the substituted compound, with (ii) at least one member selected from ethyleneoxide and propyleneoxide.

In the liquid polyethercarbonatediol compound of the present invention, the polyetherdiol compound (2) preferably has a number average molecular weight of 100 to 500.

The liquid polyestercarbonatediol compound of the present invention preferably has a number average molecular weight in the range of from 400 to 5000.

In the liquid polyethercarbonatediol compound of the present invention, the carbonate ester compound (1) is preferably selected from dialkyl carbonates, diary carbonates, alkylene carbonates and alkylaryl carbonates.

The thermoplastic polyurethane of the present invention comprises an addition reaction product of a diol component comprising at least one liquid polyethercarbonatediol compound of the present invention, with a polyisocyanate compound component comprising at least one polyisocyanate compound and with a chain extender.

In the thermoplastic polyurethane of the present invention, the polyisocyanate compound is preferably selected from 1,3-trimethylenediisocyanate, 1,4-tetramethylenediisocyanate, 1,6-hexamethylenediisocyanate, 2,2,4-trimethylhexamethylenediisocyanate, 2,4,4-trimethylhexamethylenediisocyanate, 1,9-nonamethylenediisocyanate, 1,10-decamethylenediisocyanate, 1,4-cyclohexanediisocyanate, isophoronediisocyanate, 4,4'-dicyclohexylmethanediisocyanate, 2,2'-diethyletherdiisocyanate, hydrogenated xylenediisocyanate, hexamethylenediisocyanate-biuret compound, p-phenylenediisocyanate, tolylenediisocyanate, xylylenediisocyanate, 4,4'-diphenyldiisocyanate, 1,5-naphthalenediisocyanate, 4,4'-diphenylmethanediisocyanate, 3,3'-methyleneditolylene-4,4'-diisocyanate, tolylenediisocyanate-trimethyllol propane adduct, triphenylmethanetriisocyanate, 4,4'-diphenyletherdiisocyanate, tetrachlorophenylenediisocyanate, 3,3'-dichloro-4,4'-diphenylmethane-diisocyanate, and triisocyanatephenylthiophosphate.

In the thermoplastic polyurethane of the present invention, the chain extender preferably comprises at least one member selected from ethyleneglycol, 1,2-propyleneglycol, 1,3-butanediol, 1,4-butanediol, 1,5-pentanediol, 1,6-hexanediol, 1,8-octanediol, 1,9-nonanediol, 1,10-decanediol, neopentyl glycol, 3-methyl-1,5-pentanediol, 3,3-dimethylolheptane, 1,4-cyclohexanediol, 1,4-cyclohexanedimethanol, 1,4-dihydroxyethylcyclohexane, ethylenediamine, 1,2-propylene-diamine, 1,6-hexamethylenediamine, isophoronediamine, bis(4-aminocyclohexyl)methane, piperazine, metha-or para-xylylenediamine, 2-ethanolamine, N-methyldiethanolamine, N-phenyldipropanolamine, hydroxyethylsulfamide, hydroxyethylaminoethylsulfamide, urea and water.

In the present invention, the term "liquid polyethercarbonatediol compound" includes a group of polyethercarbonatediol compounds which are in the state of a liquid and exhibit a fluidity at room temperature, namely from about 5°C to about 30°C.

The present invention enables the liquid polyethercarbonatediol compound and thermoplastic polyurethane in which the polyethercarbonatediol compound is contained as a diol component, which can solve the problems of the prior art, to be provided. Namely, the liquid polyethercarbonatediol compound of the present invention has a low viscosity and can be easily handled, and by utilizing the diol compound as a diol component, thermoplastic polyurethanes having excellent low temperature characteristics, flexibility and stretchability (elongation and deformation recovery can be provided. The thermoplastic polyurethane of the present invention has the above-mentioned excellent properties and further excellent heat resistance, hydrolysis resistance and weather resistance, and thus is well balanced in the above-mentioned properties, and thus is useful as materials for thermoplastic elastomers, elastic fibers, and artificial leathers.

BEST MODE OF CARRYING OUT THE INVENTION

The liquid polyethercarbonatediol compound of the present invention comprises a reaction product of a carbonate ester compound (1) with a polyetherdiol compound (2).

The polyetherdiol compound (2) comprises:

(A) at least one type of structural units represented by the formula (a):

$$-RO- \qquad (a)$$

in which formula (a), R represents a member selected from unsubstituted linear alkylene groups having 3 to 5 carbon atoms and substituted alkylene groups each constituted from a linear alkylene backbone chain having 3 to 5 carbon atoms and at least one, preferably one or two alkyl side chains attached to the backbone chain and each having 1 to 4 carbon atoms, and

(B) at least one type of structural units selected from those represented by the formulae (b) and (c):

$$-(CH_2)_2-O- \qquad (b)$$

and

$$-CH_2CH(CH_3)-O- \qquad (c),$$

wherein an average molar number n of the structural units of the formula (b) and an average molar number of m of the structural units of the formula (c) each per mole of the structural units of the formula (a) contained in the polyetherdiol compound (2) are, respectively and independently from each other, a positive number satisfying the requirements:

$$0 \leq n \leq 5, \text{ preferably } 1 \leq n \leq 3$$

and

$$0 \leq m \leq 5, \text{ preferably } 1 \leq m \leq 3$$

and the sum (n + m) of the average molar numbers n and m of the structural units of the formulae (b) and (c) is a positive number satisfying the requirement:

$$1 < (n + m) \le 5, \text{ preferably } 1 \le (n + m) \le 3$$

The polyetherdiol compound usable for the production of the liquid polyethercarbonatediol compound of the present invention may comprise the structural units (A) represented by the formula (a) and the structural units (B) consisting of only the structural units represented by the formula (b), and the content (average molar number m) of the structural units (C) represented by the formula (c) per mole of the structural units (A) represented by the formula (a) may be zero. In this case, in the formula (a) representing the structural units (A), R represents an unsubstituted linear alkylene backbone group having 3 to 5 carbon atoms or a substituted alkylene group constituted from a linear alkylene backbone group having 3 to 5 carbon atoms and at least one, preferably 1 or 2 alkyl side chains attached to the backbone chain and having 1 to 4 carbon atoms; and the average molar number n of the structural units represented by the formula (b) per mole of the structural units represented by the formula (a) contained in the polyetherdiol compound (2) satisfies the requirement:

$$1 < n \le 5, \text{ preferably } 1 < n \le 3.$$

The structural units represented by the formula (a) for constituting the structural units (A) will be represented by structural unit (a), and the structural units represented by the formulae (b) and (c) for constituting the structural units (B) will be represented by structural units (b) and structural units (c), respectively, hereinafter.

In the polyethercarbonatediol compound of the present invention, the unsubstituted alkylene group represented by R in the formula (a) and having 3 to 5 carbon atoms includes propylene group (trimethylene group), butylene group (tetramethylene group), and pentylene group (pentamethylene group), and the alkyl group contained, as a substituent group, in the substituted alkylene group and having 1 to 4 carbon atoms is selected from methyl, ethyl, propyl, isopropyl, butyl and isobutyl groups.

The polyetherdiol compounds usable for the production of the liquid polyethercarbonatediol compound of the present invention, for example, those comprising the structural units (a) and the structural units (b) and/or (c), includes the compounds represented by the general formulae (i) to (vii). Also, the compounds comprising the structural units (a) and the structural units (b) and/or (c) include those comprising the structural units (b) and (c) located in the structural units (b) or (c) in the above-mentioned general formulae (i) to (vii).

$$\text{HO-(b)}_n\text{-(a)-(c)}_m\text{-OH} \quad \text{(i)}$$

$$\text{HO-(b)}_{n1}\text{-(a)-(b)}_{n2}\text{-OH} \quad \text{(ii)}$$

$$\text{HO-(c)}_{m1}\text{-(a)-(c)}_{m2}\text{-OH} \quad \text{(iii)}$$

$$\text{HO-(a)-(b)}_n\text{-(c)}_m\text{-OH} \quad \text{(iv)}$$

$$\text{HO-(a)-(c)}_m\text{-(b)}_n\text{-OH} \quad \text{(v)}$$

$$\text{HO-(a)-(b)}_n\text{-OH} \quad \text{(vi)}$$

$$\text{HO-(a)-(c)}_m\text{-OH} \quad \text{(vii)}$$

In the general formulae, (a), (b) and (c) respectively represent the structural units represented by the formulae (a), (b) and (c), n and m are defined the same as above, n1, n2, m1 and m2 represent a positive numeral satisfying the requirements: n = n1 + n2 and m = m1 + m2.

The polyetherdiol compound is preferably selected from addition reaction products produced by addition reaction of at least one alkylene diol selected from, for example, 1,3-propane diol, 1,4-butane diol, 1,5-pentane diol, and substituted diols consisting of substitution reaction product of the above-mentioned alkylenediols with an alkyl group having 1 to 4 carbon atoms and attached to the alkylene group of the alkylene diols, with ethylene oxide and/or propylene oxide. This production method is disclosed in, for example, Japanese Unexamined Patent Publication No. 10-36499 and No. 10-204171.

The polyetherdiol compound usable for the present invention may be produced by a method in which a reactor is charged with at least one type of the above-mentioned diol compound and a catalyst comprising a basis alkali metal compound (preferably an alkali metal hydroxide, etc.); while ethylene oxide and/or propylene oxide is continuously fed into the reactor, the diol compounds and the alkylene compounds are reacted at a temperature of 80 to 150°C under a pressure of 49 to 490 kPa (0.5 to 5 kg/cm$^2$), until the molecular weight of the reaction product reaches a desired level corresponding to the desired n and m values; and the reaction product is subjected to after treatments, for example, neutralization, dehydration, drying and filtration. The after treatments may consist of water-rinsing and drying only, and the after treatments may be carried out in combination with absorption and/or distillation treatment for removal of the catalyst.

The alkylene diol for the production of the polyethercarbonatediol compound of the present invention may be employed in combination with at least one member selected from unsubstituted alkylene diol comprising 6 or more, preferably 6 to 12 carbon atoms and substituted alkylene diols containing an alkyl substituent group having carbon atoms in the same number as that mentioned above and attached to the alkylene backbone chain of the alkylene diol.

The amount of the alkylene diol for the combination use together with the alkylene diol compound for the production of the polyetherdiol compound for the present invention, is preferably 50 molar% or less of the alkylene diol compound.

The alkylenediols for the combination use include aliphatic diols, for example, 1,6-hexanediol, 1,7-heptanediol, 1,8-octanediol, 1,9-nonanediol, 1,10-decanediol, 1,12-dodecanediol, 2-methyl-1,8-octanediol, 1,4-cyclohexanedimethanol.

The polyetherdiol compound usable for the present invention preferably has a number average molecular weight of 100 to 500, more preferably 120 to 400.

In the above-mentioned polyetherdiol compounds usable for the present invention, those (for example, represented by the general formulae (ii) or (vi)) comprising the structural units (a) and the structural units (b) but not the structural units (c), namely, satisfying m = 0, and 1 < n ≤ 5, are preferably employed. Namely, the preferably polyetherdiol compounds for the present invention are those having the structural units (a) and the structural (b) but not the structural units (c), namely, m = 0 and 1 < n ≤ 5; represented by the general formulae (ii) or (vi); and having a number molecular weight of 100 to 500, more preferably 120 to 400.

In the polyetherdiol compounds usable for the present invention, those having the structural units in which R preferably represents a straight alkylene chain having carbon atoms of 3 to 5 and free from subsistents, more preferably a trimethylene group, are particularly preferred.

The carbonate esters compound (1) usable for the present invention include aliphatic, aromatic and aromatic group-containing aliphatic carbonate esters, for example, dialkyl carbonates, diaryl carbonates, alkylene carbonates. The aliphatic carbonates may be cycloaliphatic carbonates. Practically preferable carbonate esters are, for example, dimethyl carbonate, diethyl carbonte, di-n-butyls carbonate, diisobutyl carbonate, diphenyl carbonate, methylphenyl carbonate, ethylene carbonate, propylenecarbonate.

The reaction of the polyetherdiol compound (2) with the carbonate ester compound (1) may be carried out in accordance with the conventional method for producing a polycarbonatediol. Namely, the liquid polyethercarbonatediol compound of the present invention can be produced by subjecting the polyetherdiol compound (1) and the carbonate ester compound (2) to a transesterification reaction in the presence of a transesterification catalyst while a by-product, namely an aliphatic or aromatic alcohol, is continuously withdrawn to the outside of the reaction system.

In this reaction procedure, there is no specific limitation to the amount of the polyetherdiol compound as long as the target compound can be produced. Preferably, the polyetherdiol compound is used in a molar amount of 0.8 to 3.0 times, more preferably 0.9 to 1.5 times, the molar amount of the carbonate ester compound, to cause almost all of both the terminals of the molecular backbone chains of the resultant liquid polyethercarbonatediol compounds to be occupied by hydroxyl groups. Also, the transesterification catalyst is preferably used in an amount of 1 to 5000 ppm, more preferably 10 to 1000 ppm, based on the mass of the polyetherdiol compound. The carbonate ester compound may be used alone or in a mixture of two or more compounds.

There is no specific limitation to the conditions of the above-mentioned transesterification reaction, as long the target compound can be produced. For example, for the purpose of producing the target compound at a high efficiency, the transesterification reaction is preferably carried out at a temperature of 110 to 200°C under the ambient atmospheric pressure for about 1 to 24 hours, then at a temperature of 110 to 240°C (particularly preferably 140 to 240°C) under the ambient atmospheric pressure for about 1 to 20 hours, thereafter at the same temperature as that in the intermediate stage, while gradually increasing the vacuum degree to a final target reduced pressure of 266.6 kPa (20 mHg) or less, for about 0.1 to 20 hours. To withdraw the by-product consisting of alcohol, the reaction is preferably provided with a distillation column. Also, the transesterification reaction may be carried out while a non-reactive gas, for example, nitrogen, helium and argon, flows through the reaction system.

There is no limitation to the type of the above-mentioned transesterification catalyst as long as it is a catalyst compound effective for the transesterification reaction.

The transesterification catalyst may be one comprising at least one member selected from, for example, titanium compounds such as titanium tetrachloride and tetra alkoxytitaniums (for example, tetra-n-butoxytitanium, tetraisopropoxytitanium, etc.), metallic tin and tin compounds such as tin hydroxide, tin chloride, dibutyltin dilaurate, dibutyltin oxide and butyltin-tris(2-ethyl-hexanoate). Among them, tetraalkoxytitaniums (for example, tetra-n-butoxytitanium, tetraisopropoxytitanium, etc.), dilutyltin dilaurate, dibutyltin oxide, butyltin-tris(2-ethylhexanoate) are preferably employed. Further among them, tetraalkoxy-titaniums (tetra-n-butoxytitanium and tetraisopropoxytitanium) are more preferably employed.

The liquid polyethercarbonatediol compound of the present invention preferably has a number average molecular weight in the range of from 400 to 5000, more preferably from 500 to 3000. Accordingly, the molecular weight of the liquid polyethercarbonatediol compound is preferably controlled by a conventional method, for example, in the case where the hydroxyl value (namely the molecular weight) of the reaction product falls outside of the target range, namely, the number average molecular weight of the reaction product is less than 400, the polyetherdiol compound is further reacted while distilling the polyetherdiol compound under reduced pressure; and in the case where the number average molecular weight of the resultant product is more than 5,000, an additional amount of the polyetherdiol compound is added to the reaction system and further transesterification-reacted. Also, if necessary, after the molecular weight is adjusted, the residual transesterification catalyst in the resultant liquid polyethercarbonatediol compound is preferably deactivated with a phosphorus compound (for example, phosphoric acid, butyl phosphorate or dibutyl phosphorate). The liquid polyethercarbonatediol compound of the present invention can be obtained by the above-mentioned procedures.

In the production of the liquid polyethercarbonatediol compound of the present invention, particularly preferably, a polyetherdiol compound comprising by the structural units (a) and the structural units (b) but not the structural units (c), namely, $m = 0$ and $1 < n \leq 5$, is reacted with a carbonate ester compound.

Further preferably, the structural units (a) in which R represents a straight alkylene chain group are preferred, more preferably, R represents a trimethylene group. Namely, in the reaction for the present invention, preferably the diol component comprising a polyetherdiol compound having the structural units (a) in which R represents a trimethylene group) and the structural units (b) but not the structural units (c) and having $m = 0$, $1 < n \leq 5$, is reacted with a carbonate ester component to produce a liquid polyethercarbonatediol compound having, preferably, a number average molecular weight of 400 to 5,000, more preferably 500 to 3,000. In this case, the polyether diol compound having the above-mentioned appropriate number average molecular weight of 100 to 500 is preferably employed.

The thermoplastic polyurethane of the present invention is produced by subjecting a diol component which comprises at least one type of liquid polyethercarbonatediol compound of the present invention, at least one type of polyisocyanate compound and a chain-extender to a reaction and, namely, to a polyurethane-producing reaction.

The polyisocyanate compound usable for the present invention can be selected from various polyisocyanates, for example, aliphatic (including cycloaliphatic) and aromatic diisocyanates. The aliphatic diisocyanates are preferably selected from, for example, 1,3-trimethylenediisocyanate, 1,4-tetramethylenediisocyanate, 1,6-hexamethylenediisocyanate, 2,2,4-trimethylhexamthylenediisocyanate, 2,4,4-trimethylhexamthylenediisocyanate, 1-9-novamethylenediisocyanate, 1,10-decamethylenediisocyanate, 1,4-cyclohexanediisocyanate, isophoronediisocyanate, 4,4-dicyclohexylmethanediisocyanate, 2,2'-diethyletherdiisocyanate, hydrogenated xylylenediisocyanae and hexamethylenediisocyanate-biuret compound.

The aromatic diisocyanate is preferably selected from, for example, p-phenylenediisocyanate, tolylenediisocyanate, xylylenediisocyanate, 4,4'-diphenyldiisocyanate, 1,5-naphthalenediisocyante, 4,4'-diphenylmethanediisocyanate (MDI), 3,3'-methyleneditolylene-4,4'-diisocyanate, tolylenediisocyanatetrimethylolpropane adduct, 4,4'-diphenyltriphenylmethanetriisocyanate, 4,4'-diphenyletherdiisocyanate, tetrachlorophenylenediisocyanate, 3,3'-dichloro-4,4'-diphenylmethanediisocyanate, and triisocyanatophenyl thiophosphate. Further, triphenylmethanetriisocyanate and triisocyanatophenyl thiophosphate can be used as a polyisocyanate compound for the present invention.

Among the above-mentioned polyisocyanate compounds, 4,4'-diphenylmethanediisocyanate, 1,6-hexamethylenediisocyanate and isophoranediisocyanate are preferably employed and particularly 4,4'-diphenylmethanediisocyanate is more preferably employed. The polyisocyanate compounds as mentioned above may be employed alone or in a mixture of two or more thereof.

The chain extender usable for the polyurethane of the present invention preferably comprises a low molecular weight compound having at least two hydrogen atoms capable of reacting with the isocyanate group. As a compound usable for the chain extender, a polyol and a polyamine are preferably employed. The chain extender includes aliphatic diols (including cycloaliphatic diols), for example, ethyleneglycol, 1,2-propyleneglycol, 1,3-butanediol, 1,4-butanediol, 1,5-pentanediol, 1,6-hexanediol, 1,8-octanediol, 1,9-nonanediol, 1,10-decanediol, neopentylglycol, 3-methyl-1,5-pentanediol, 3,3-dimethylolheptane, 1,4-cyclohexanediol, 1,4-cyclohexanedimethanol, and 1,4-dihydroxyethylcyclohexane; aliphatic and aromatic diamines, for example, ethylenediamine, 1,2-propylenediamine, 1,6-hexamethylenediamine, isophoronediamine, bis(4-aminocyclohexyl)methane, piperazine and meta(or para)-xylylenediamine; aliphatic or aromatic aminoalcohols, for example, 2-ethanolamine, N-methyldiethanolamine, and N-phenyldipropanolamine; hydroxyalkylsulfamides, for example, hydroxyethylsulfamide and hydroxyethylaminoethylsulfamide; and urea and water. Among the above-mentioned compounds for the chain extender, 1,4-butanediol, 2-ethanolamine and 1,2-propylene diamine are more preferably employed. The compounds for the chain extender may be employed alone or in a mixture of two or more thereof.

In the polyurethane-forming reaction, the liquid polyethercarbonatediol compound may be used in combination with at least one type of aliphatic polycarbonatediol compound produced from a aliphatic or cycloaliphatic diol and a carbonate ester compound. The above-mentioned aliphatic polycarbonatediol compounds may be employed alone or in a mixture of two or more thereof, and is preferably employed in an amount by mass equal to or less than the mass amount of the liquid polyethercarbonatediol compound of the present invention.

The aliphatic diol compound usable for the production of the polycarbonate diol compound usable in combination with the polyethercarbonatediol compound of the present invention includes 1,3-propanediol, 1,4-butanediol, 1,5-pentanediol, 1,6-hexanediol, 1,7-heptanediol, 1,8-octanediol, 1,9-nonanediol, 1,10-decanediol, 2-methyl-1,3-propanediol, 3-methyl-1,5-pentanediol, neopentylglycol, 2-methyl-1,8-octanediol, 1,4-cyclohexanedimethanol. The carbonate compound to be reacted with the above-mentioned aliphatic diol compounds is the same as those mentioned hereinbefore.

The polyurethane-forming reaction may be carried out in no solvent or in the presence of a solvent which is non-reactive to an isocyanate group. In the reaction in the absence of solvent, (1) a chain extender is mixed into the liquid polyethercarbonatediol compound, the resultant mixture is further mixed with a polyisocyanate compound, and then, the whole amount of the resultant reaction mixture is subjected to the reaction; or (2) the liquid polyethercarbonatediol compound is reacted with the polyisocyanate compound to prepare a prepolymer having isocyanate group, and then the prepolymer is mixed and reacted with a chain extender; or (3) the liquid polyethercarbonatediol compound is mixed with a chain extender, the resultant mixture is mixed and reacted with a portion of the all amount of the polyisocyanate compound to prepare a prepolymer having hydroxyl group, and then the resultant prepolymer-containing mixtures mixed and reacted with the remaining portion of the polyisocyanate compound. The non-solvent reaction is preferably carried out at a temperature of 80 to 150°C. In the case where a prepolymer is prepared as an intermediate product, the prepolymer which has a relatively low molecular weight is heated to polymerize the prepolymer.

In the case where the polyurethane-forming reaction is carried out in the presence of a solvent, (1) the liquid polyethercarbonatediol compound is dissolved in a solvent, the resultant solution is mixed with a chain extender, the resultant mixture was mixed with the polyisocyanate compound, and then all of the resultant reaction mixture is subjected to the reaction; or (2) the liquid polyethercarbonatediol compound is dissolved in a solvent, the resultant solution is mixed and reacted with the polyisocyanate compound to prepare a prepolymer having isocyanate group, and the prepolymer is mixed and reacted with a chain extender; or (3) the liquid polyetherdiol polyethercarbonatediol compound is dissolved in a solvent, the solution is mixed and reacted with a chain extender and a portion of all amount of the polyisocyanate compound to prepare a prepolymer having hydroxyl group, then the prepolymer-containing mixture is mixed and reacted with the remaining portion of the polyisocyanate compound, to produce the desired polyurethane. The solvent preferably comprises methylethylketone, ethyl acetate, toluene, dioxane, dimethylformamide or dimethylsulfoxide.

In the polyurethane-forming reaction, the liquid polyethercarbonatediol compound and the chain extender are preferably employed in a proportion of 0.1 to 10 moles of the chain extender per mole of the liquid polyethercarbonatediol compound. The proportion is appropriately adjusted in consideration of the properties required to the target thermoplastic polyurethane. The polyisocyanate compound is preferably employed in a molar amount approximately equal to the total molar amount of the liquid polyethercarbonatediol compound and the chain extender. Particularly, the amount of the chain extender is preferably adjusted so that an equivalent ratio of the total equivalent amount of the active hydrogen contained in the liquid polyethercarbonatediol compound and the chain extender to the equivalent amount of isocyanate group is controlled in the range of from 1:08 to 1:1.2, more preferably, 1:0.95 to 1:1.05. Also, in the polyurethane-forming reaction, a conventional amine or tin catalyst may be employed to promote the reaction.

The thermoplastic polyurethane of the present invention produced by the above-mentioned methods has molecular terminals which may be any of a hydroxyl group and an isocyanate group. The thermoplastic polymethane of the present invention can have a further increased molecular weight or a network structure by further reacting with a compound having at least two hydrogen atoms reactive to the isocyanate group or a compound having at least two isocyanate group. A closs-linkage structure can be introduced into the thermoplastic polyurethane of the present invention by further reacting the thermoplastic polyurethane with a compound having urethane bond and/or urea bond or a compound having at least three hydrogen atoms reactive to the isocyanate group. Further, the thermoplastic polyurethane may employed in combination with a conventional additive unless the combination hinders the effect of the present invention.

Examples

The present invention will be further explained by the following examples and comparative examples.

(I) The properties of the polyetherdiol compounds and the liquid polyethercarbonatediol compounds were subjected to the following measurements.

1. Hydroxyl value (OH value (mgKOH/g))
The sample for measurement was subjected to a hydroxyl value measurement in accordance with JIS K 1557 and the OH value of the sample was calculated in accordance with the following equation:

$$OH\ value\ (mgKOH/g) = 28.05\ (B - A)\ f/s$$

wherein S represents an amount (in g) of the sample, A represents a necessary amount (in ml) of an aqueous solution of 0.5 N potassium hydroxide to the titration of the sample,
B represents a necessary amount (in ml) of the 0.5 N potassium hydroxide aqueous solution to the control test titration, and f represents a factor of the 0.5 N potassium hydroxide aqueous solution.
2. Number average molecular weight (Mn)
The Mn was calculated in accordance with the following equation:

$$Mn = 112200/OH\ value$$

3. Average addition molar amount (n, m)
The average addition molar amount (n) of ethyleneoxide and the average addition molar amount (m) of propyleneoxide in the compound were calculated in accordance with the following equation:

$$Mn = 44m + 58n + 14x + 34$$

wherein Mn represents a number average molecular weight of the compound, and x represents the number of methylene groups, represented by R in the structural units (a).
4. Acid value (mgKOH/g)
The acid value of the compound was calculated in accordance with the following equation:

$$Acid\ value\ (mgKOH/g) = 5.61(C - D)f'/s'$$

wherein s' represents the amount (g) of the sample subject to the measurement, C represents the necessary amount (ml) of 0.1 N potassium hydroxide aqueous solution to the titration of the sample, D represents the necessary amount (ml) of 0.1 N potassium hydroxide aqueous solution to the control test titration, and f' represents a factor of the 0.1 N potassium hydroxide aqueous solution.
5. Glass transition temperature (Tg (°C))
The glass transition temperature of the compound was determined by using a differential scanning calorimeter (made by Shimazu Seisakusho, Model: DSC-50) in a nitrogen gas atmosphere at a temperature increasing rate of 10°C/minute.
6. Viscosity (Pa·sec)
The viscosity of the sample was determined by using a E-rotational viscometer (made by Tokyo Keiki) at a temperature of 75°C.

(II) The properties of the thermoplastic polyurethane was determined by the following measurements.

1. Tensile properties
A specimen of the polyurethane was subjected to a tensile measurement in accordance with JIS K 7311, using a tensile strength tester (made by Orientec, model: Tensilon (trademark) UCT-5T) at 23°C at 50%RH, and from the resultant data, the initial modulus tensile stress at elongation of 100%, 200% and 300% tensile strength and ultimate elongation of the specimen were calculated.

2. Glass transition temperature (Tg)

A specimen was subjected to a dynamic elastic property test using a dynamic elastic property tester (made by Rheometrix, model: RSA II) at a frequency of one Hz, at a strain of 0.05% at a temperature in the range of from -100 to +200°C, in a tensile mode, and from the resultant data, a peak temperature at which the loss elastic modulus reached a peak was determined. The Tg is represented by the temperature at peak.

3. Permanent elongation

A specimen having a pair of marks spaced 20 mm (Lo) from each other was subjected to a tensile measurement using a tensile strength tester (made by Orientec, trademark Tensilon UCT-5T) at 23°C at 50% RH, in accordance with JIS K 7311.

The specimen was elongated to a length of ½ of the ultimate length at which the specimen was broken and held at this length for 10 minutes. Then, the specimen was allowed to rapidly shrink without bouncing at a returning rate of 500 mm/minute, then the shrunk specimen was removed from the specimen-chucks of the tester and left to stand for 10 minutes. The length L between the pair of masks on the specimen was measured.

The permanent elongation of the specimen was calculated in accordance with the following equation:

$$\text{Permanent elongation (\%)} = \frac{(L - Lo)}{Lo} \times 100$$

4. Hysteresis loss

A long rectangular specimen having dimensions of 5 mm x 100 mm was subjected to a tensile measurement using a tensile strength tester (made by Orientec, trademark: Tensilon UCT-5T) at 23°C at 50%RH. The long rectangular specimen was held between a pair of chuncks spaced 40 mm from each other and elongated at a tensile rate of 10 mm/minute to a length of 150% based on the original length, and then immediately allowed to shrink at the same rate as mentioned above. The hysteresis loss of the specimen was calculated in accordance with the following equation:

$$\text{Hysteresis Loss(\%)} = \frac{(\text{Area surrounded by elongation} - \text{shrinkage curve})}{(\text{Area surrounded by the original stress} - \text{strain curve})} \times 100$$

5. Weathering resistance

A specimen was prepared and subjected to a weathering test in accordance with JIS K 7350-4. The specimen was placed in a sunshine weather meter (made by Suga tester K.K., trademark: Sunshine Super Long Life Weather Meter WEL-SUN-HC-H) and exposed to an open flame carbon are lamp under an arc voltage of 50V at an arc amperage of 60A at a black panel temperature of 63°C and a relative humidity of 50% for 100 hours. During the test, 100 cycles of a water spray treatment was applied. In each cycle, a water-spray was carried out for 12 minutes and then interrupted for 48 minutes. After the test was completed, the resultant specimen was subjected to the measurement of the tensile strength and the ultimate elongation, and retentions in the tensile strength and the ultimate elongation, based on the original tensile strength and ultimate elongation of the specimen were calculated.

Example 1

[Preparation of a polyetherdiol compound]

A polyetherdiol (1) which was an addition reaction product of 1,3-propanediol with ethyleneoxide in an average amount of 1.27 moles per mole of 1,3-propanediol, was prepared in accordance with the method disclosed in Japanese Unexamined Patent Publication No. 10-36499. The properties of this polyetherdiol compound (1) are shown in Table 1.

[Production of a liquid polyethercarbonatediol compound]

A glass reactor equipped with a stirrer, thermometer, a distillation column (having a fractional distillation tube, a reflux head and condenser arranged in a top portion of the column, and having a capacity of one liter, was charged with 304g (2.30 moles) of the polyetherdiol (I), 226g (2.51 moles of dimethyl carbonate made by Ube Industries Ltd. and 0.0790g (0.232 milli mole) of tetra-n-butoxytitanium, and the resultant reaction mixture was heated to a temperature of 160°C and held at this temperature for 2 hours. Then, the reaction mixture was gradually heated to a temperature 170°C over a time of 6.5 hours while distilling and removing a mixture of methyl alcohol with dimethyl carbonate from the reaction system, and thereafter while the temperature of the reaction system was held at 190°C, the mixture of methyl alcohol with dimethyl carbonate was further removed under a pressure of 40 kPa (300 mmHg) over a time of 0.5 hour and then under a pressure of 13.3 kPa (100 mmHg) over a time of 3 hours, by distilling. Then the reaction mixture was subjected to a reaction under a pressure of 253 to 26.7 Pa (1.9 to 0.2 mmHg) over a time of 4.5 hours while removing polyetherdiol by distilling, to provide a liquid polyethercarbonatediol compound having a hydroxyl value of 50.6 mgKOH/g.

This polyethercarbonatediol compound is mixed with 2.11g (0.0160 mole) of the polyetherdiol (I) and the resultant mixture was stirred at a temperature of 185°C under a pressure of 26.9 kPa (200 mmHg) for two hours to control the molecular weight of the liquid polyethercarbonatediol compound; and then the dibutyl phosphate was added in a molar amount equal to that of the catalyst into the reaction mixture, and the resultant mixture was stirred at 130°C under a pressure of 13.3 kPa (100 mmHg) for 2 hours to deactivate the catalyst. The finally obtained liquid polyethercarbonatediol compound

(A) had the properties shown in Table 2.

[Production of a thermoplastic polyurethane]

In a glass reactor equipped with a stirrer, a thermometer and a cooling pipe and having a capacity of 1 liter, 50g (0.0261 mole) of the liquid polyethercarbonatediol (A) and 13.05g (0.0522 mole) of 4,4'-diphenylmethanediisocyanate were completely dissolved in 112g of dimethylformamide at 60°C, then the resultant solution was subjected to a reaction at 80°C for 2 hours. Then, the reaction liquid was added with 0.187g (0.0026 mole) of n-butylamine and 20g of dimethylformamide, the resultant reaction liquid was subjected to reaction at room temperature for 1.4 hours.

Then the resultant reaction liquid was mixed with 1.84g (0.0249 mole) of 1,2-propylenediamine and 20g of dimethylformamide, and the resultant reaction mixture was subjected to a reaction at 3°C for 5 minutes, to prepare a prepolymer having a hydroxyl group and an isocyanate group located at both the terminals of the molecule, respectively.

The temperature of the prepolymer solution was adjusted to room temperature to further proceed the polymethane-forming reaction.

The viscosity of the prepolymer solution increased with the progress of the reaction, thus, the viscosity of the solution was measured at intervals of one hour by using a E type viscometer, and the reaction was stopped at a stage of 4.5 hours after the start of the reaction at which stage substantially no increase in viscosity of the solution appeared. The final viscosity of the solution was 51.2 Pa·s at 40°C. The resultant solution of the thermoplastic polymethane was heated to a temperature of 60°C, and then the heated solution was casted on a releasing glass plate, and heat-treated at 70°C for one hour then at 120°C for 2 hours, to provide a thermoplastic polyurethane film having a thickness of about 200 μm. The properties of the film are shown in Tables 3 and 4.

Example 2

[Production of thermoplastic polyurethane]

In the same reactor as used in Example 1, 60g (0.0313 mole) of the liquid polyethercarbonatediol compound (A) and 3.384g (0.0375 mole) of 1,4'-butanediol were completely dissolved in 188g of dimethylformaide at a temperature of 60°C. From the resultant solution, a portion thereof in an amount of about 1g was withdrawn by an injector and subjected to a measurement of water content using a Karl Fischer water content meter. The, 4,4'-diphenylmethanediisocyante in an amount of 17.22g (0.0688 mole) was mixed into the solution as mentioned above, so that the molar amount of the 4,4'-diphenylmethanediisocyante became equal to the total molar amount of the liquid polyethercarbonatediol (A), 1,4'-butanediol and water in the resultant reaction mixture. Then, the temperature of the reaction mixture was adjusted to 80°C to start heating and reaction of the mixture and 9 hours after the start of the reaction, at which stage substantially no increase in viscosity of the reaction mixture occurred, the reaction procedure was stopped. The final viscosity of the reaction mixture was 44.0 Pa·sec at a temperature of 40°C.

The properties of the resultant thermoplastic polyurethane were determined by the same measurements as in Example 1. The measurement results are shown in Table 3.

Example 3

[Production of thermoplastic polymethane]

A thermoplastic polymethane was produced by the same procedures as in Example 2, except that 1,4-butanediol was used in an amount of 5.077g (0.0563 mole), dimethylformamide was employed in an amount of 201g, and the 4,4'-diphenylmethanediisocyante was employed in an amount of 21.92g (0.0876 mole) so that the molar amount of 4,4'-diphenylmethanediisocyante became equal to the total molar amount of the liquid polyethercarbonatediol (A), 1,4'-butanediol and water in the reaction mixture. The final viscosity of the reaction mixture was 45.1 Pa·sec at a temperature of 40°C. The properties of the resultant thermoplastic polyurethane film were determined by the same measurements as in Example 1. The measurement results are shown in Table 3.

Example 4

[Preparation of a polyetherdiol compound]

A polyetherdiol (II) which was an addition reaction product of 1,5-pentanediol with ethyleneoxide in an average amount of 1.02 moles per mole of 1,5-pentanediol, was prepared by the same procedures as in Example 1.
The properties of this polyetherdiol compound (II) are shown in Table 1.

[Production of a liquid polyethercarbonatediol compound]

A liquid polyethercarbonatediol (B) was produced by the same procedures as in Example, except that the polyetherdiol (I) was replaced by 343g (2.30 moles) of the polyetherdiol (II) as mentioned above, to provide a liquid polyethercarbonatediol compound having a hydroxyl value of 47.2 mgKOH/g.
The resultant liquid polyethercarbonatediol compound was mixed with 3.68g (0.023 mole) of polyetherdiol (II) to control the molecular weight of the liquid polyethercarbonatediol compound in the same manner as in Example 1, and then the catalyst was deactivated in the same manner as in Example 1. The obtained liquid polyethercarbonatediol compound (B) had the properties shown in Table 2.

[Production of a thermoplastic polyurethane]

In the glass reactor as in Example 1, 50g (0.0254 mole) of the liquid polyethercarbonatediol (B) and 12.50g (0.0500 mole) of 4,4'-diphenylmethanediisocyanate were completely dissolved in 110g of dimethylformamide at 60°C, then the resultant solution was subjected to a reaction at 80°C for 2 hours. Then, the reaction liquid was added with 0.180g (0.0025 mole) of n-butylamine and 20g of dimethylformamide, the resultant reaction liquid was subjected to reaction at room temperature for 1.4 hours. Then the resultant reaction liquid was mixed with 1.79g (0.0242 mole) of 1,2-propylenediamine and 20g of dimethylformamide, and the resultant reaction mixture was subjected to a reaction at 3°C for 5 minutes, to prepare a prepolymer having a hydroxyl group and an isocyanate group located at both terminals of the molecule, respectively.
The temperature of the prepolymer solution was adjusted to room temperature to further proceed to the polymethane-forming reaction in the same manner as in Example 1.
The temperature of the prepolymer solution was adjusted to room temperature, and the reaction of the prepolymer was carried out in the same manner as in Example 1. At a stage of 4.5 hours after the start of the reaction, at which stage the increase in the viscosity of the polymer solution became about zero, the reaction procedure was stopped. The final viscosity of the polymer solution was 42.0 Pa·sec at a temperature of 40°C. The properties of the resultant thermoplastic polyurethane film were determined by the same measurements as in Example 1. The measurement results are shown in Table 3.

Example 5

[Production of thermoplastic polyurethane]

In the same reactor as used in Example 1, 50g (0.0254 mole) of the liquid polyethercarbonatediol (B) and 12.70g (0.0508 mole) of 4,4'-diphenylmethane diisocyante were completely dissolved in 130g of dimethylformamide at a temperature of 60°C. The resultant solution was subjected to a reaction at a temperature of 80°C for 2 hours. The resultant solution was mixed with 1.55g (0.0254 mole) of 2-ethanolamine and 20g of dimethylformamide, then the resultant reaction mixture was subjected to a reaction at room temperature for 2.1 hours, to provide a prepolymer having hydroxyl groups located at both terminals of the prepolymer.

After the prepolymer solution was left to stand at room temperature for 20 minutes, the temperature of the prepolymer solution was adjusted to 80°C, and then the prepolymer solution was further subjected to a reaction in the same manner as in Example 2. At 10 hours after the start of the reaction substantially no increase in viscosity of the reaction mixture was found and the reaction was stopped. The final viscosity of the reaction mixture was 38.0 Pa·sec at 40°C. The properties of the resultant thermoplastic polyurethane film were determined by the same measurements as in Example 1. The measurement results are shown in Table 3.

Comparative Example 1

[Preparation of polyetherdiol]

A polyetherdiol (III) which was an addition reaction product of 1,6-hexanediol with ethyleneoxide in an average amount of 1.27 moles per mole of 1,6-hexanediol was prepared by the same procedures as in Example 1. The properties of the polyetherdiol (III) are shown in

Table 1.

[Production of liquid polyethercarbonatediol]

A liquid polyethercarbonatediol having a hydroxyl value of 47.2 mgKOH/g was produced by the same procedures as in Example 1, except that the polyetherdiol (I) was replaced by the polyetherdiol (III) in an amount of 400g (2.30 moles.) The resultant polyethercarbonatediol was mixed with 4.00g (0.023 mole) of polyetherdiol (III) and further subjected to a reaction in the same manner as in Example 1 to control the molecular weight of the product, and the catalyst was deactivated in the same matter as in Example 1. The resultant liquid polyethercarbonatediol (C) had the properties as shown in Table 2.

[Production of thermoplastic polyurethane]

In the same reactor as that used in Example 1, 50g (0.0251 mole) of the liquid polyethercarbonatediol (C) and 12.56g (0.0502 mole) of 4,4'-diphenylmethanediisocyanate were completely dissolved in 110g of dimethylformamide at 60°C, and the resultant solution was subjected to a reaction at 80°C for 2 hours. Then the resultant solution was mixed with 0.180g (0.0025 mole) of n-butylamine and 20g of dimethylformamide and the resultant reaction mixture was subjected to a reaction at room temperature for 1.4 hours. Then the resultant reaction mixture was further mixed with 1.76g (0.0238 mole) of 1,2-propylenediamine and 20g of dimethylformamide, and the resultant mixture was subjected to a reaction at a temperature of 3°C for 5 minutes, to provide a prepolymer having a hydroxyl group and an isocyanate group located at both the terminals of the molecule, respectively.

The temperature of the prepolymer solution was adjusted to room temperature and then the prepolymer solution was subjected to a reaction in the same manner as in Example 1. The reaction was stopped at a stage of 4.5 hours after the start of the reaction, at which stage substantially no increase in viscosity of the reaction mixture was found. Finally, the resultant solution exhibited a viscosity of 43.9 Pa·sec at 40°C. The properties of the resultant thermoplastic polyurethane film were determined by the same measurements as in Example 1. The measurement results are shown in Tables 3 and 4.

Comparative Example 2

[Production of thermoplastic polyurethane]

In the same reactor as that used in Example 1, 50g (0.0251 mole) of the liquid polyethercarbonatediol (C) and 12.57g (0.0503 mole) of 4,4'-diphenylmethanediisocyanate were completely dissolved in 139g of dimethylformamide at 60°C, and the resultant solution was subjected to a reaction at 80°C for 2 hours. Then the resultant solution was mixed with 1.53g (0.0251 mole) of 2-ethanolamine and 20g of dimethylformamide and the resultant reaction mixture was subjected to a reaction at room temperature for 2.1 hours, to provide a prepolymer having hydroxyl groups located at both terminals of the molecule.

The resultant prepolymer solution was left to stand at room temperature for 20 minutes and then the temperature of the prepolymer solution was adjusted to a temperature of 80°C and then the prepolymer solution was subjected to a reaction in the same manner as in Example 2. The reaction was stopped 1.0 hours after the start of the reaction, at which stage substantially no increase in viscosity of the reaction mixture was found. Finally, the resultant solution exhibited a viscosity of 36.1 Pa·sec at 40°C. The properties of the resultant thermoplastic polyurethane film were determined by the same measurements as in Example 1. The measurement results are shown in Table 3.

Comparative Example 3

[Preparation of polyetherdiol]

A polyetherdiol (IV) which was an addition reaction product of 1,6-hexanediol with propyleneoxide in an average amount of 1.76 moles per mole of 1,6-hexanediol was prepared by the same procedures as in Example 1. The properties of the polyetherdiol (IV) are shown in Table 1.

[Production of liquid polyethercarbonatediol]

In the same reactor as that used in Example 1, 440g (2.00 moles) of polyetherdiol (IV), 185g (2.06 moles) of dimethylcarbonate and 0.0881g (0.259 mmoles) of tetra-n-butoxytitanium (catalyst) were placed and the resultant mixture was held at a temperature of 160°C for 3 hours while refluxing. Then the temperature of the reaction mixture was increased to 190° over a time of 13 hours, while distillation-removing a mixture of methyl alcohol with dimethyl carbonate, and 10 hours after the start of the temperature increase, an additional amount of 0.0881g (0.259 mmole) of the catalyst was mixed with the reaction mixture. Then, while maintaining the temperature of the reaction mixture at 190°C, the mixture of the methyl alcohol with dimethyl carbonate was removed from the reaction mixture of distillation under a pressure of 13.3 kPa (100 mmHg) over a time of 3 hours. Then the reaction mixture was subjected to reaction under a pressure of 587 to 493 kPa (4.4 - 3.7 mmHg) over a time of 11 hours while removing polyetherdiol by distillation, to provide a liquid polyethercarbonatediol having a hydroxyl value of 56.6 mgKOH/g. The catalyst in the reaction mixture was deactivated in the same manner as in Example 1. The finally obtained liquid polyethercarbonatediol (D) had the properties as shown in Table 2.

[Production of thermoplastic polyurethane]

In the same reactor as in Example 1, 60g (0.0297 mole) of the liquid polyethercarbonatediol, 5.35g (0.0594 mole) of 1,4-butanediol and 0.017g (0.05 mmole) of tetra-n-butoxytitanium were completely dissolved in 204g of dimethylformamide at 60°C, and then into the resultant solution, 25.43g (0.1016 mole) of 4,4'-diphenylmethanediisocyanate were mixed in the same manner as in Example 2. Then the resultant solution was subjected to a reaction in the same manner as in Example 2. The reaction was stopped 7 hours after the start of the reaction at which stage substantially no increase in viscosity of the reaction solution appeared. The final viscosity of the reaction solution was 4.4 Pa·sec at 40°C.

The properties of the resultant thermoplastic polyurethane film were determined by the same measurements as in Example 1. The measurement results are shown in Table 3.

Comparative Example 4

[Production of thermoplastic polyurethane]

In the same reactor as that used in Example 1, 50g (0.0251 mole) of polytetramethyleneglycol (made by HODOGAYA KAGAKU KK, molecular weight of: 1989) and 12.56g (0.0502 mole) of 4,4'-diphenylmethanediisocyanate were completely dissolved in 110g of dimethylformamide at 60°C, and the resultant solution was subjected to a reaction at 80°C for 2 hours. Then the resultant solution was mixed with 0.180g (0.0025 mole) of n-butylamine and 20g of dimethylformamide and the resultant reaction mixture was subjected to a reaction at room temperature for 1.4 hours. Then the resultant reaction mixture was further mixed with 1.76g (0.0238 mole) of 1,2-propylenediamine and 20g of dimethylformamide, and the resultant mixture was subjected to a reaction at a temperature of 3°C for 5 minutes, to provide a prepolymer having a hydroxyl group and an isocyanate group located at both the terminals of the molecule, respectively.

The temperature of the prepolymer solution was adjusted to room temperature and then the prepolymer solution was subjected to a reaction in the same manner as in Example 1. The reaction was stopped at a stage of 4.5 hours after the start of the reaction, at which stage substantially no increase in viscosity of the reaction mixture was found. Finally, the resultant solution exhibited a viscosity of 39.4 Pa·sec at 40°C. The properties of the resultant thermoplastic polyurethane film were determined by the same measurements as in Example 1. The measurement results are shown in Tables 3 and 4.

Table 1

| Item Example No. | | Polyetherdiol | | | | | |
|---|---|---|---|---|---|---|---|
| | | Type | Structural units | n,m | Mn | OH value (mgKOH/g) | Acid value (mgKOH/g) |
| Example | 1 | I | (a1), (b) | (n) 1.27 | 132 | 850 | 0.036 |
| | 4 | II | (a2), (b) | (n) 1.02 | 149 | 753 | 0.027 |
| Comparative Example | 1 | III | (a3), (b) | (n) 1.27 | 174 | 644 | 0.007 |
| | 3 | IV | (a3), (c) | (m) 1.76 | 220 | 510 | 0.158 |

[Note]  Structural units: (a1)$-(CH_2)_3O-$, (a2)$-(CH_2)_5O-$,
(a3)$-(CH_2)_6O-$, (b)$-(CH_2)_2O-$,
(c)$-CH(CH_3)CH_2O-$

n:  Average molar amount of structural units (b) per mole of structural units (a)

m:  Average molar amount of structural units (c) per mole of structural units (a)

Table 2

| Item Example No. | | Type of poly-ether-diol | Polyethercarbonatediol | | | | | |
|---|---|---|---|---|---|---|---|---|
| | | | Type | OH value (mgKOH/g) | Acid value (mgKOH/g) | Mn | Tg (°C) | Viscosity (Pa·sec) |
| Example | *1 | I | A | 58.6 | 0.031 | 1915 | -52.1 | 0.924 |
| | *4 | II | B | 57.0 | 0.020 | 1968 | -54.7 | 0.552 |
| Comparative Example | *1 | III | C | 56.3 | 0.032 | 1991 | -62.4 | 0.658 |
| | *3 | IV | D | 55.5 | 0.132 | 2021 | -56.0 | 0.404 |

Table 3

| Item | | | | | | Properties | | | | | | | |
|---|---|---|---|---|---|---|---|---|---|---|---|---|---|
| | Composition (*) | | | Tg | Melting temper-ature | Initial modulus | Tensile stress | | | Tensile stress | Ultimate elonga-tion | Permanent elonga-tion | Hysteri-sis loss |
| | PECD | MDI | Chain extender | | | | 100% stress (MPa) | 200% stress (MPa) | 300% stress (MPa) | | | | |
| Example No. | | | | (°C) | (°C) | (MPa) | | | | (MPa) | (%) | (%) | (%) |
| Example 1 | A;1 | 2 | PD;1 | -34 | – | 9.3 | 4.7 | 6.3 | 8.1 | 21.4 | 813 | 19 | 59 |
| 2 | A;1 | 2.2 | BD;1.2 | -23 | – | 4.6 | 1.7 | 2.1 | 2.8 | 18.8 | 1070 | 12 | 69 |
| 3 | A;1 | 2.8 | BD;1.8 | -20 | – | 8.5 | 3.3 | 4.7 | 6.4 | 29.3 | 839 | 15 | 69 |
| 4 | B;1 | 2 | PD;1 | -38 | – | 9.3 | 4.8 | 6.0 | 7.5 | 22.3 | 769 | 17 | 60 |
| 5 | B;1 | 2 | EA;1 | -32 | – | 3.0 | 1.1 | 1.8 | 2.4 | 15.1 | 892 | 15 | 77 |
| Comparative Example 1 | C;1 | 2 | PD;1 | -46 | – | 7.0 | 5.1 | 7.0 | 9.2 | 45.7 | 640 | 10 | 60 |
| 2 | C;1 | 2 | EA;1 | -27 | – | 3.4 | 2.2 | 3.2 | 4.6 | 29.1 | 640 | 12 | 43 |
| 3 | D;1 | 3 | BD;2 | -21 | – | 8.2 | 4.0 | 6.1 | 8.8 | 25.4 | 563 | 16 | 67 |
| 4 | T;1 | 2 | PD;1 | -82 | 4 | 6.6 | 3.8 | 5.5 | 8.3 | 50.5 | 729 | 5 | 60 |

[Note] (*) The numerals indicate molar proportional amount of the components

PECD:   Polyethercabonatediol

T    :   Polytetramethyleneglycol

MDI  :   4,4'-diphenylmethanediisocyanate

PD   :   1,2-propylenediamine

Table 4

| Item<br>Example No. | | Weather resistance | |
|---|---|---|---|
| | | Tensile strength retention (%) | Ultimate elongation retention (%) |
| Example | 1 | 70 | 50 |
| Comparative Example | 1 | 65 | 25 |
| | 4 | 12 | 5 |

In view of the examples and comparative examples shown above, when the liquid polyethercarbonatediols of the present invention and the conventional polyetherdiol compounds having the same molecular weight as each other are compared with each other, the liquid polyethercarbonatediols of the present invention have a low viscosity and a low glass transition temperature compared to the conventional polyetherdiol compounds, the thermoplastic polyurethanes prepared from the polyethercarbonatediol of the present inventions have a low glass transition temperature similar to that of the conventional thermoplastic polyurethanes and a clearly higher ultimate elongation than that of the conventional polymethane. Also, the thermoplastic polyurethanes produced from the polyethercarbonatediols of the present invention exhibit satisfactory flexibility and stretchability. Further the thermoplastic polyurethanes produced from the liquid polyethercarbonatediols of the present invention exhibit a very high weather resistance in comparison with that of the thermoplastic polyurethane produced from the conventional polyetherdiol compounds.

INDUSTRIAL UTILIZABILITY

The liquid polyethercarbonatediol of the present invention is useful as a material for production of polymethanes, polyesters, etc., and usable as a polymeric modifier and a polymeric plasticizer. Also, the thermoplastic polyurethane of the present invention is useful as a material for the production of thermoplastic elastomers, elastic fibers and artificial leathers.

**Claims**

1.  A liquid polyethercarbonatediol compound comprising a reaction product of

    (1) a carbonate ester compound, with
    (2) a polyetherdiol compound comprising (A) at least one type of structural units represented by the formula (a):

    -RO-            (a)

    in which formula (a), R represents a member selected from unsubstituted linear alkylene groups having 3 to 5 carbon atoms and substituted alkylene groups each constituted from a linear alkylene backbone chain having 3 to 5 carbon atoms and at least one alkyl side chain attached to the backbone chain and having 1 to 4 carbon atoms, and (B) at least one type of structural units selected from those represented by the formulae (b) and (c):

    $-(CH_2)_2-O-$            (b)

    and

    $-CH_2CH(CH_3)-O-$            (c),

    wherein an average molar number n of the structural units of the formula (b) and an average molar number of m of the structural units of the formula (c) each per mole of the structural units of the formula (a) contained in the polyetherdiol compound (2) are, respectively and independently from each other a positive number satisfying the requirements:

$$0 \leq n \leq 5$$

and

$$0 \leq m \leq 5,$$

and the sum (n + m) of the average molar numbers n and m of the structural units of the formulae (b) and (c) is a positive number satisfying the requirement:

$$1 < (n + m) \leq 5$$

2.  The liquid polyethercarbonatediol compound as claimed in claim 1 wherein, in the polyetherdiol compound (2), the average molar number m of the structural units of the formula (c) per mole of the structural units of the formula (a) is zero.

3.  The liquid polyethercarbonatediol compound as claimed in claim 1 or 2, wherein the polyetherdiol compound (2) is selected from addition reaction products of (i) at least one member selected from unsubstituted and substituted 1,3-propanediol, unsubstituted and substituted 1,4-butanediols, and unsubstituted and substituted 1,5-pentanediols, each of which substituted compounds has at least one alkyl group having 1 to 4 carbon atoms and attached to the alkylene group of the substituted compound, with (ii) at least one member selected from ethyleneoxide and propyleneoxide.

4.  The liquid polyethercarbonatediol compound as claimed in claim 1 or 2, wherein the polyetherdiol compound (2) has a number average molecular weight of 100 to 500.

5.  The liquid polyestercarbonatediol compound as claimed in claim 1 or 2, having a number average molecular weight in the range of from 400 to 5000.

6.  The liquid polyethercarbonatediol compound as claimed in claim 1 or 2, wherein the carbonate ester compound (1) is selected from dialkyl carbonates, diary carbonates, alkylene carbonates and alkylaryl carbonates.

7.  A thermoplastic polyurethane comprising an addition reaction product of a diol component comprising at least one liquid polyethercarbonatediol compound as claimed in any one of claims 1 to 6, with a polyisocyanate compound component comprising at least one polyisocyanate compound and with a chain extender.

8.  The thermoplastic polyurethane as claimed in claim 7, wherein the polyisocyanate compound is selected from 1,3-trimethylenediisocyanate, 1,4-tetramethylenediisocyanate, 1,6-hexamethylenediisocyanate, 2,2,4-trimethylhexamethylenediisocyanate, 2,4,4-trimethylhexamethylenediisocyanate, 1,9-nonamethylenediisocyanate, 1,10-decamethylenediisocyanate, 1,4-cyclohexanediisocyanate, isophoronediisocyanate, 4,4'-dicyclohexylmethanediisocyanate, 2,2'-diethyletherdiisocyanate, hydrogenated xylenediisocyanate, hexamethylenediisocyanate-biuret compound, p-phenylenediisocyanate, tolylenediisocyanate, xylylenediisocyanate, 4,4'-diphenyldiisocyanate, 1,5-naphthalenediisocyanate, 4,4'-diphenylmethanediisocyanate, 3,3'-methyleneditolylene-4,4'-diisocyanate, tolylenediisocyanate-trimethyllol propane aduct, triphenylmethanetriisocyanate, 4,4'-diphenyletherdiisocyanate, tetrachlorophenylenediisocyanate, 3,3'-dichloro-4,4'-diphenylmethane-diisocyanate, and triisocyanatephenylthiophosphate.

9.  The thermoplastic polyurethane as claimed in claim 7, wherein the chain extender comprises at least one member selected from ethyleneglycol, 1,2-propyleneglycol, 1,3-butanediol, 1,4-butanediol, 1,5-pentanediol, 1,6-hexanediol, 1,8-octanediol, 1,9-nonanediol, 1,10-decanediol, neopentyl glycol, 3-methyl-1,5-pentanediol, 3,3-dimethylolheptane, 1,4-cyclohexanediol, 1,4-cyclohexanedimethanol, 1,4-dihydroxyethylcyclohexane, ethylenediamine, 1,2-propylene-diamine, 1,6-hexamethylenediamine, isophoronediamine, bis(4-aminocyclohexyl)methane, piperazine, metha-or para-xylylenediamine, 2-ethanolamine, N-methyldiethanolamine, N-phenyldipropanolamine, hydroxyethylsulfamide, hydroxyethylaminoethylsulfamide, urea and water.

| **INTERNATIONAL SEARCH REPORT** | International application No. |
|---|---|
| | PCT/JP2005/001039 |

**A. CLASSIFICATION OF SUBJECT MATTER**
Int.Cl$^7$ C08G64/02, C08G18/44

According to International Patent Classification (IPC) or to both national classification and IPC

**B. FIELDS SEARCHED**

Minimum documentation searched (classification system followed by classification symbols)
Int.Cl$^7$ C08G18/44, C08G64/00-64/42

Documentation searched other than minimum documentation to the extent that such documents are included in the fields searched

| Jitsuyo Shinan Koho | 1926-2005 | Toroku Jitsuyo Shinan Koho | 1994-2005 |
|---|---|---|---|
| Kokai Jitsuyo Shinan Koho | 1971-2005 | Jitsuyo Shinan Toroku Koho | 1996-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | EP 1219655 A1 (UBE INDUSTRIES, LTD.),<br>03 July, 2002 (03.07.02),<br>Claim 1<br>& JP 2002-256069 A<br>Claim 1; Par. No. [0001]<br>& US 2002/123595 A1 | 1-9 |
| A | EP 358555 A2 (DAICEL CHEMICAL INDUSTRIES, LTD.),<br>14 March, 1990 (14.03.90),<br>Page 3, lines 44 to 46; page 3, lines 56 to 60;<br>Claims 1, 7<br>& JP 2-255822 A<br>page 1, lower left column, lines 5 to 19;<br>page 2, lower right column, line 16 to page 3,<br>upper left column, line 4; page 3, upper right<br>column, lines 6 to 16<br>& US 5100999 A1 | 1-9 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>16 February, 2005 (16.02.05) | Date of mailing of the international search report<br>08 March, 2005 (08.03.05) |
|---|---|
| Name and mailing address of the ISA/<br>Japanese Patent Office | Authorized officer |
| Facsimile No. | Telephone No. |

Form PCT/ISA/210 (second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 59066577 A
- JP 63305127 A
- JP 2255822 A
- JP 2002256069 A
- JP 10036499 A
- JP 10204171 A